# EUROPEAN PATENT APPLICATION

(11) **EP 3 016 068 A1**
(43) Date of publication of application: **04.05.2016**
(21) Application number: 14816959.2
(22) Date of filing: 27.06.2014
(51) Int. Cl.: G06T 7/00, G06F 3/0346

(54) **METHOD AND DEVICE FOR DETERMINING USER INPUT ON BASIS OF VISUAL INFORMATION ON USER'S FINGERNAILS OR TOENAILS**

(30) Priority: 27.06.2013 KR 20130074438
(71) Applicant: Futureplay Inc., Seoul 135-929 (KR)
(72) Inventor: HWANG, Sung Jae, Seoul 135-929 (KR)
(74) Representative: Zardi, Marco
(86) International application number: PCT/KR2014/005767
(87) International publication number: WO 2014/209071

(57) **Abstract**

The present invention relates to a method and a device for determining a user input on the basis of visual information on a user's fingernails or toenails. The method, according to one aspect of the present invention, comprises the steps of: acquiring visual information on a user's fingernails or toenails captured by a photographing means; and determining the user's input on the basis of the visual information.

## Description

### FIELD OF THE INVENTION

The present invention relates to a method and a device for determining a user input on the basis of visual information on a user's fingernails or toenails.

### BACKGROUND

With the development of electronics/computer technologies, various kinds of user input means are being used for diverse electronic devices/computers.

Among those user input means, keyboards, mice, electronic pens, styluses and the like are widely known. Such user input means may actively and directly generate an electronic signal so that a user input can be made accurately. However, the user input means are required to be purposely provided in addition to or separately from a device for which the user input is made.

Meanwhile, there exists a gesture recognition-based technique for determining a user input on the basis of a position or form of a hand, a form of a body, or the like made by a user and recognized by an imaging means such as a camera. This conventional technique requires no separate user input means other than the camera, but has a drawback in that the user should bother to learn various gestures which may not be intuitive.

In this situation, the inventor(s) suggest herein totally novel user inputs and present a technique to enable these user inputs to be utilized alone or in combination with other existing user inputs.

### SUMMARY OF THE INVENTION

One object of the present invention is to solve all the above-described problems in prior art.

Another object of the invention is to enable a user to provide a user input using fingernails or toenails.

According to one aspect of the invention to achieve the above objects, there is provided a method comprising the steps of: acquiring visual information on a user's fingernails or toenails captured by an imaging means; and determining the user's input on the basis of the visual information.

In addition, there are further provided other methods and systems to implement the invention, as well as computer-readable recording media having stored thereon computer programs for executing the methods.

According to the invention, there is provided a method to enable a user to provide a user input using fingernails or toenails.

### BRIEF DESCRIPTION OF THE DRAWINGS

FIG. 1 schematically shows the configuration of a device for determining a user input on the basis of visual information on a user's fingernails or toenails according to one embodiment of the invention.
FIG. 2 shows correspondence relations which may be considered to be preferable according to one embodiment of the invention.
FIG. 3 shows a correspondence relation which may be considered to be preferable according to another embodiment of the invention.

### DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual elements within each of the embodiments may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

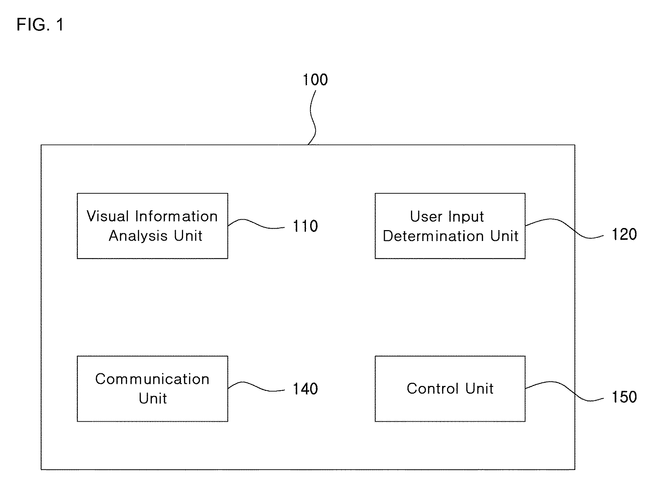

FIG. 1 schematically shows the configuration of a device for determining a user input on the basis of visual information on a user's fingernails or toenails according to one embodiment of the invention.

A device 100 according to one embodiment of the invention may be any type of digital equipment having a memory means and a microprocessor for computing capabilities. The device 100 may acquire visual information on a user's fingernails or toenails. To this end, the device 100 may include an imaging device such as a camera (not shown). For example, the device 100 may be a smart device such as a smart phone, a smart pad, a smart glass, and a smart watch, or may be a somewhat traditional device such as a desktop computer, a notebook computer, a workstation, a personal digital assistant (PDA), a web pad, a mobile phone, a television, and a set-top box.

As shown in FIG. 1, the device 100 may comprise a visual information analysis unit 110, a user input determination unit 120, a communication unit 140, and a control unit 150. According to one embodiment of the invention, at least some of the visual information analysis unit 110, the user input determination unit 120, the communication unit 140, and the control unit 150 may be program modules. The program modules may be included in the device 100 in the form of operating systems, application program modules, or other program modules, while they may be physically stored on a variety of commonly known storage devices. Further, the program modules may also be stored in a remote storage device that may communicate with the device 100. Meanwhile, such program modules may include, but not limited to, routines, subroutines, programs, objects, components, data structures, and the like for performing specific tasks or executing specific abstract data types as will be described below in accordance with the invention.

First, the visual information analysis unit 110 according to one embodiment of the invention may function to acquire and analyze visual information on a user's fingernails or toenails.

The visual information analysis unit 110 may first receive an original image captured by a camera, i.e., an original image including an image of the user's fingernails or toenails.

The visual information analysis unit 110 may then perform a process to separate a foreground and a background from the original image. To this end, the visual information analysis unit 110 may use a known skin color model or a circular feature descriptor to distinguish the portions having a greater possibility of being the image of the user's fingernails or toenails from those having a lesser possibility.

Finally, the visual information analysis unit 110 may perform a known erosion operation on the separated foreground image having the greater possibility of being the image of the user's fingernails or toenails, and then perform filtering to remove noise by passing, among the resulting blobs, only those having a size not less than a threshold value.

Thus, the visual information analysis unit 110 may acquire the visual information on the user's fingernails or toenails, which is appropriate for a user input. The visual information may be utilized by the user input determination unit 120 as will be described below.

Next, the user input determination unit 120 may determine the user's input on the basis of the visual information on the user's fingernails or toenails, which is provided from the visual information analysis unit 110.

Examples of preferred user inputs include the following:
(1) A finger or toe being bent (one or more joints being bent)
   In this case, the portion of the fingernail or toenail having a white color (or a similar color) may be changed to have a red color (or a similar color). Further, the gloss of the fingernail or toenail may be changed.
(2) A finger or toe being straightened (one or more bent joints being spread)
   In this case, the middle portion of the fingernail or toenail may temporarily have a white color. Further, the gloss of the fingernail or toenail may be changed.
(3) A finger or toe applying pressure (to an object)
   In this case, the portion around the end of the fingernail or toenail may have a white color.
(4) Two or more fingers applying pressure to each other (the fingers being pressed against each other)
   In this case, the portions around the ends of the fingernails of the contacting fingers may have a white color.
(5) A finger or toe being rolled (being rotated about a virtual line in the longitudinal direction of the finger or toe serving as a central axis)

In this case, the gloss of the fingernail or toenail may be changed.

Specifically, the visual information on the fingernails or toenails in the above examples may be a RGB or CMYK value of a specific region of the fingernails or toenails, but may also be shading, brightness, saturation, gloss level, or the like. The region used to specify such a value may be the entirety of the fingernails or toenails, but may also be a part thereof.

According to the experiments of the inventor(s), the aspect of the above change in the color or gloss of the fingernails or toenails tends to be regular, rather than be varied, for each user. Therefore, on the basis of the above-described visual information, the user input determination unit 120 may determine a corresponding user input as a specified input. The correspondence relations may be pre-stored in a storage (not shown) in the device 100.

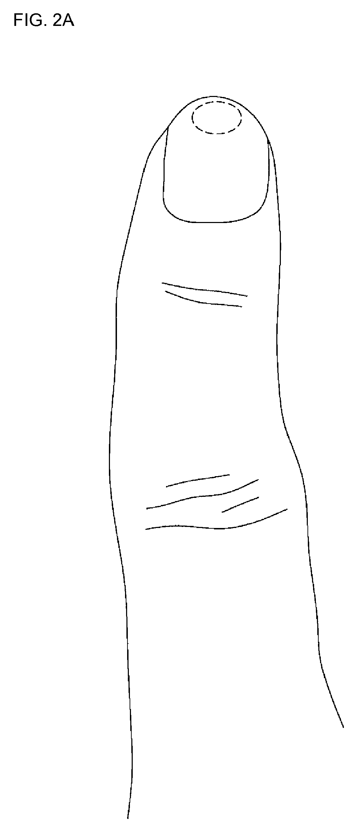

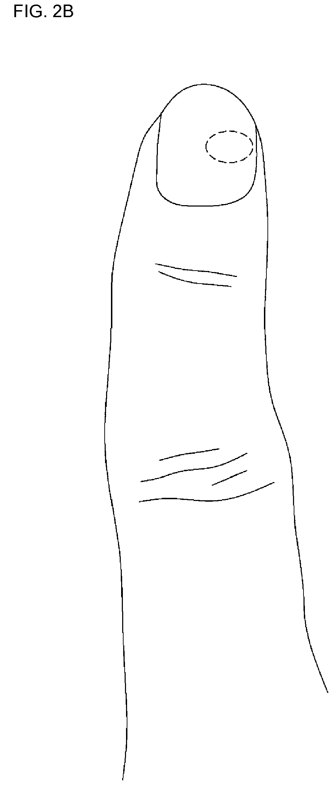

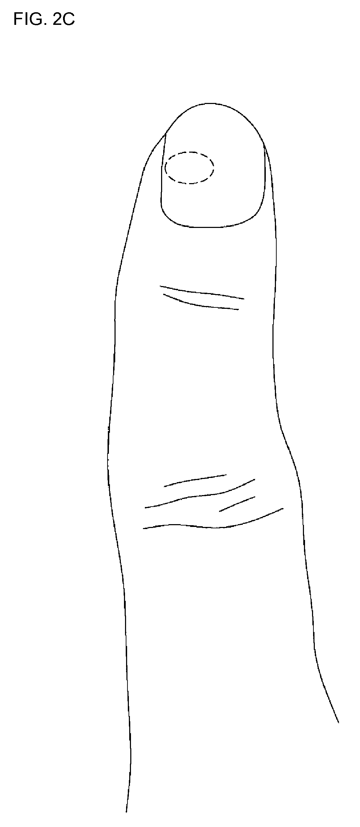

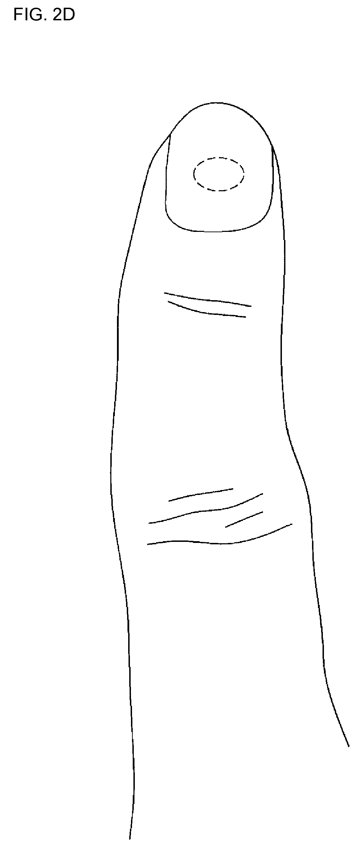

The correspondence relations, which may be considered to be preferable according to embodiments of the invention, will be discussed in detail below with reference to FIG. 2. In the following description, it is assumed that a user input is determined as a user uses a finger. However, it is apparent to those skilled in the art that the user input may be similarly determined even when the user uses a toe.

When the user applies pressure straight to an object using the finger, the portion indicated by a broken line in FIG. 2A (i.e., the portion around the end of the fingernail) or those adjacent thereto may have a white color. Thus, the user input determination unit 120 may measure the color value (e.g., RGB or CMYK value) of the above portion in the image of the fingernail provided from the visual information analysis unit 110, or the variation in the value before and after the application of the pressure, and then determine the user input to be the application of the pressure by the finger. The application of the pressure may be intuitively and naturally recognized and considered as a user selection action such as a click or touch. The selection may be made for a specific visual object shown on a display means (not shown) included in or associated with the device 100. Of course, the selection may also be made for the entire contents being displayed, rather than for an object. Further, those skilled in the art may define a correspondence relation such that the above selection is considered to be made for any other objects or events.

Meanwhile, when the user applies pressure to an object using the finger, with the finger being turned sideways or rolled to a certain extent, the portion indicated by a broken line in FIG. 2B or 2C or those adjacent thereto may have a white color. Thus, the user input determination unit 120 may measure the color value (e.g., RGB or CMYK value) of the above portion in the image of the fingernail provided from the visual information analysis unit 110, or the variation in the value before and after the application of the pressure, and then determine the user input to be the different type of application of the pressure by the finger. The application of the pressure may be recognized and considered as a different type of selection or operation (e.g., an operation for moving a specific object or cursor to the left or right).

Meanwhile, when the user spreads the bent finger, the portion indicated by a broken line in FIG. 2D or those adjacent thereto may temporarily have a white color. Thus, the user input determination unit 120 may measure the color value (e.g., RGB or CMYK value) of the above portion in the image of the fingernail provided from the visual information analysis unit 110, or the variation in the value before and after the action, and then determine the user input to be interruption or cancellation of a specific selection or operation.

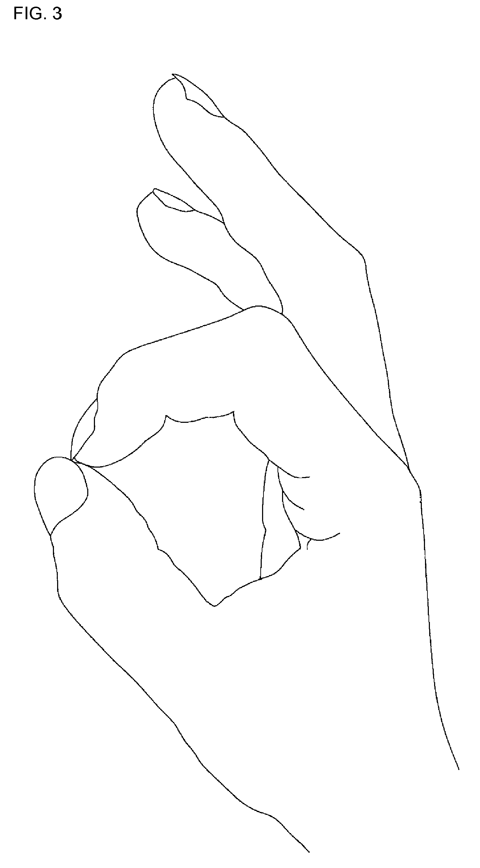

The correspondence relation, which may be considered to be preferable according to another embodiment of the invention, will be further discussed below with reference to FIG. 3.

When a user joins two fingers together and presses them against each other as shown in FIG. 3, the portions around the ends of the fingernails may have a white color. Thus, the user input determination unit 120 may measure the color value (e.g., RGB or CMYK value) of the above portions in the image of the fingernails provided from the visual information analysis unit 110, or the variation in the value before and after the pressing, and then determine the user input to be the mutual application of the pressure by the two fingers. The user action may be particularly advantageous in that it allows the user to generate the user input using only his/her fingers without depending on an object.

Meanwhile, although the user input determination unit 120 may determine a user input on the basis of an image of fingernails as described above, the determined input can be used together with other conventional user inputs, e.g., those according to a gesture recognition-based technique which employs positions or forms of a user's fingers, or positions of fingernails thereof. That is, the user input determination unit 120 may specify a position (e.g., a position on a display of the device 100) where a user desires to generate an input, on the basis of a position of a finger or fingernail of the user according to a conventional technique, and determine the user input that the user desires to generate at the specified position, on the basis of an image of the fingernail of the user according to the invention. For example, when the user presses, bends, or spreads a finger, or joins two or more fingers together and presses them against each other, with the finger(s) being placed at a specific position in front of a camera, so that the color of the fingernail(s) is changed, the user input determination unit 120 may cause a user input corresponding to the color change to be determined and then generated at a position on the display corresponding to the specific position. In this case, the user input determination unit 120 may determine the type or degree/intensity of the generated user input to be varied with the size or distribution of the color values (e.g., RGB or CMYK values) in the image of the fingernail(s). For example, this function may be implemented such that the user changes the color of the fingernail(s) to perform zoom-in/zoom-out on the display of the device 100 or change the output (e.g., sound output) of the device 100.

Next, the communication unit 140 according to one embodiment of the invention may function to enable data transmission/receipt between the device 100 and an external device (not shown), or data transmission/receipt to/from the visual information analysis unit 110 and the user input determination unit 120. To this end, the communication unit 140 may include a variety of conventional communication modules. The communication modules may be commonly known electronic communication components that may join a variety of communication networks (not shown) such as local area networks (LANs), metropolitan area networks (MANs), and wide area networks (WANs). Preferably, the communication networks may be the Internet or the World Wide Web (WWW). However, the communication networks are not necessarily limited thereto, and may at least partially include known wired/wireless data communication networks, known telephone networks, or known wired/wireless television communication networks.

Lastly, the control unit 150 according to one embodiment of the invention may function to control data flow among the visual information analysis unit 110, the user input determination unit 120, and the communication unit 140. That is, the control unit 150 according to the invention may control data flow into/out of the device 100, or data flow among the respective components of the device 100, such that the visual information analysis unit 110, the user input determination unit 120, and the communication unit 140 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, data structures and the like, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler or the like, but also high-level language codes that can be executed by a computer using an interpreter or the like. The above hardware devices may be changed to one or more software modules to perform the processes of the present invention, and vice versa.

Although the present invention has been described in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method comprising the steps of:
acquiring visual information on a user's fingernails or toenails captured by an imaging means; and
determining the user's input on the basis of the visual information.

2. The method of Claim 1, wherein the visual information is information on color of the fingernails or toenails, or a change in the color thereof.

3. The method of Claim 1, wherein the determined user input is at least one of selection, operation, and interruption or cancellation of one of the selection and the operation.

4. The method of Claim 1, wherein the determined user input is generated by the user pressing at least two fingers against each other without depending on an object.

5. The method of Claim 1, wherein the determined user input is used together with another user input determined according to a recognized gesture of the user's fingers or toes.

6. A device comprising:
a visual information analysis unit for acquiring visual information on a user's fingernails or toenails captured by an imaging means; and
a user input determination unit for determining the user's input on the basis of the visual information.

7. The device of Claim 6, wherein the visual information is information on color of the fingernails or toenails, or a change in the color thereof.

8. The device of Claim 6, wherein the determined user input is at least one of selection, operation, and interruption or cancellation of one of the selection and the operation.

9. The device of Claim 6, wherein the determined user input is generated by the user pressing at least two fingers against each other without depending on an object.

10. The device of Claim 6, wherein the determined user input is used together with another user input determined according to a recognized gesture of the user's fingers or toes.
